# EUROPEAN PATENT APPLICATION

(11) **EP 4 531 422 A1**
(43) Date of publication of application: **02.04.2025**
(21) Application number: 23829351.8
(22) Date of filing: 09.01.2023
(51) Int. Cl.: H04Q 11/00

(54) **CLIENT SERVICE MAPPING METHOD AND DEVICE, STORAGE MEDIUM, AND ELECTRONIC DEVICE**

(30) Priority: 27.06.2022 CN 202210739126
(71) Applicant: ZTE CORPORATION, Shenzhen, Guangdong 518057 (CN)
(72) Inventor: ZHANG, Yuanbin, Shenzhen, Guangdong 518057 (CN); YUAN, Yan, Shenzhen, Guangdong 518057 (CN)
(74) Representative: Mozzi, Matteo
(86) International application number: PCT/CN2023/071389
(87) International publication number: WO 2024/001158

(57) **Abstract**

The present disclosure provides a client service mapping method and device, a storage medium, and an electronic device. The client service mapping method comprises: mapping client services to corresponding containers, wherein each container is a structure having a fixed length, each container comprises an overhead area and a payload area, and for containers carrying client services in different rate ranges, the sizes of overhead areas of the containers are different. By means of the present disclosure, the problem that it is currently impossible to configure containers for client services having different rates, so as to make a compromise between an overhead transmission cycle and a bandwidth utilization rate is solved.

## Description

The present disclosure claims priority to Chinese Patent Application No. 202210739126.5, filed with the China National Intellectual Property Administration on June 27, 2022 and entitled "Client Mapping Method and Device, Storage Medium, and Electronic Device", which is incorporated herein by reference in its entirety.

### Technical Field

Embodiments of the present disclosure relate to the field of communications, and in particular, to a client mapping method and device, a storage medium, and an electronic device.

### Background

In the current definition of an optical transport network (OTN), multiple service signals are mapped into a payload of an OTN signal by dividing the payload of the OTN signal into n slots and inserting the multiple service signals into one or more slots in the payload of the OTN signal, with the slots being implemented in a byte-interleaved manner.

According to the OTN standard G.709 in a related art, a minimum slot granularity for the OTN technology is 1.25G. This slot granularity results in significant bandwidth waste when carrying services below 1.25G, such as Fast Ethernet (FE) and Synchronous Transfer Module (STM)-1. For instance, when an FE signal of 100M is mapped into slots of 1.25G, the bandwidth waste is over 92%. The industry has initiated research and standardization efforts for sub1G technologies, with Optical Service Unit (OSU) being one of the containers for carrying sub1G services. However, due to the low-bandwidth of clients, if the overhead ratio is low, it leads to a longer cycle for overhead transmission, which implies a longer alarm detection time. This prolonged cycle can prevent protection switching from satisfying the 50ms time requirement. Conversely, if the overhead ratio is high, there is a certain loss in terms of bandwidth utilization. Therefore, due to the need to support a wide range of client bit rates, finding a compromise between overhead transmission periods and bandwidth utilization for clients with different bit rates is a technical problem that needs to be addressed.

Regarding the technical problem in the related art that containers cannot be configured for clients with different bit rates so as to compromise between overhead transmission periods and bandwidth utilization, no solution has been provided yet.

### Summary

Embodiments of the present disclosure provide a client mapping method and device, a storage medium, and an electronic device, which may at least solve the technical problem in the related art that containers cannot be configured for clients with different bit rates so as to compromise between overhead transmission periods and bandwidth utilization.

According to an embodiment of the present disclosure, provided is a client mapping method, including: mapping a client into a corresponding container, wherein the container is a structure with a fixed length and includes an overhead area and a payload area; and containers that carry clients within different bit rate ranges have different overhead areas.

According to another embodiment of the present disclosure, provided is a client mapping device, including: a mapping module, configured to map a client into a corresponding container, wherein the container is a structure with a fixed length and includes an overhead area and a payload area; and containers that carry clients within different bit rate ranges have different overhead areas.

According to still another embodiment of the present disclosure, provided is a computer readable storage medium, the computer readable storage medium stores a computer program, and the computer program, when running on a processor, causes the processor to execute the operations in any one of the method embodiments.

According to yet another embodiment of the present disclosure, provided is an electronic device, including a memory and a processor, wherein the memory stores a computer program, and the processor is configured to run the computer program so as to execute the operations in any one of the method embodiments.

By means of the present disclosure, a client is mapped to a corresponding container having a structure with a fixed length, and the containers may correspondingly carry clients within different bit rate ranges according to different configured sizes of overhead areas, therefore, the solution provided in the embodiments of the present disclosure may solve the technical problem in the related art that containers cannot be configured for clients with different bit rates so as to compromise between overhead transmission periods and bandwidth utilization, and may achieve the effect of satisfying the requirements for the transmission periods of overhead fields with high real-time demands without increasing the transfer frequency for the overhead that has high real-time requirements.

### Brief Description of the Drawings

Fig. 1 is a block diagram illustrating the hardware structure of an optical transport network device for implementing a client mapping method according to some embodiments of the present disclosure;
Fig. 2 is a flowchart of a client mapping method according to some embodiments of the present disclosure;
Fig. 3 is a schematic diagram of a scenario where two OTN devices transmit a client signal through an OTN interface according to some embodiments of the present disclosure;
Fig. 4 is a schematic structural diagram of a small granularity container corresponding to a client within a high bit rate range according to some embodiments of the present disclosure;
Fig. 5 is a schematic structural diagram of a small granularity container corresponding to a client within a medium bit rate range according to some embodiments of the present disclosure;
Fig. 6 is a schematic structural diagram of a small granularity container corresponding to a client within a low bit rate range according to some embodiments of the present disclosure; and
Fig. 7 is a structural block diagram of a client mapping device according to some embodiments of the present disclosure.

### Detailed Description of the Embodiments

Embodiments of the present disclosure will be described below in detail with reference to the accompanying drawings and in conjunction with embodiments.

It should be noted that, terms such as "first" and "second" in the specification, claims, and accompanying drawings of the present disclosure are used to distinguish similar objects, but are not necessarily used to describe a specific sequence or order.

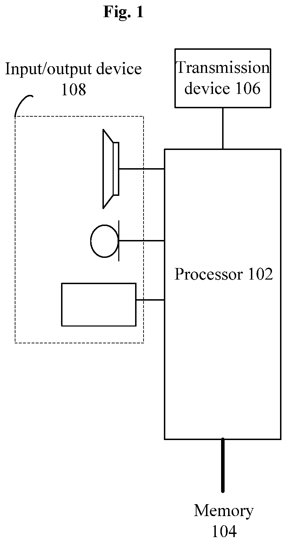

The client mapping method provided in the embodiments of the present disclosure may be executed in an optical transport network device, a computer second node, or a similar arithmetic apparatus. Taking the operation on the optical transport network device as an example, Fig. 1 is a block diagram illustrating the hardware structure of an optical transport network device for implementing a client mapping method according to some embodiments of the present disclosure. As shown in Fig. 1, the optical transport network device may include one or more (only one is shown in Fig. 1) processors 102 (each of the one or more processors 102 may include but is not limited to a processing apparatus such as a microprocessor (e.g., a Micro Controller Unit (MCU)) or a programmable logic device (e.g., a Field Programmable Gate Array (FPGA)), and a memory 104 for storing data. The optical transport network device may further include a transmission device 106 for communication functions and an input/output device 108. Those having ordinary skill in the art may understand that the structure shown in Fig. 1 is merely exemplary, which does not limit the structure of the optical transport network device. For example, the optical transport network device may also include more or fewer components than shown in Fig. 1, or have a different configuration than that shown in Fig. 1.

The memory 104 may be configured to store a computer program, for example, a software program and a module of application software, such as a computer program corresponding to the client mapping method in the embodiments of the present disclosure. The one or more processors 102 run the computer program stored in the memory 104, so as to execute various function applications and data processing, that is, to implement the foregoing method. The memory 104 may include a high bit rate random access memory, and may also include a non-volatile memory, such as one or more magnetic storage devices, flash memory, or other non-volatile solid-state memory. In some examples, the memory 104 may further include a memory which is remotely located with respect to the one or more processors 102 and may be connected to the optical transport network device over a network. Examples of such networks include, but are not limited to, the internet, intranets, local area networks, mobile communication networks, and combinations thereof.

The transmission device 106 is configured to receive or transmit data via a network. Specific examples of the described network may include a wireless network provided by a communication provider of an optical transport network device. In an embodiment, the transmission device 106 may include a Network Interface Controller (NIC) that may be coupled to other network devices via a base station to communicate with the Internet. In an embodiment, the transmission device 106 can be a Radio Frequency (RF) module for communicating wirelessly with the Internet.

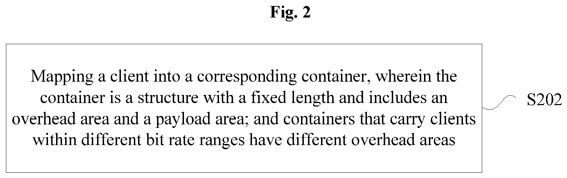

The present embodiment provides a client mapping method operating in the above optical transport network device or network architecture. Fig. 2 is a flowchart of a client mapping method according to some embodiments of the present disclosure, as shown in Fig. 2, the flow includes the following operation S202.

In operation S202, a client is mapped into a corresponding container, wherein the container is a structure with a fixed length and includes an overhead area and a payload area; and containers that carry clients within different bit rate ranges have different overhead areas.

By means of the described operation, a client is mapped to a corresponding container having a structure with a fixed length, and the containers may correspondingly carry clients within different bit rate ranges according to different configured sizes of overhead areas, therefore, the solution provided in the embodiments of the present disclosure may solve the technical problem in the related art that containers cannot be configured for clients with different bit rates so as to compromise between overhead transmission periods and bandwidth utilization, and may achieve the effect of satisfying the requirements for the transmission periods of overhead fields with high real-time demands without increasing the transfer frequency for the overhead that has high real-time requirements.

As an exemplary implementation, in an actual application, the client may be mapped into a small granularity container. The small granularity container is a frame structure with a fixed length, and contains two parts which are respectively an overhead area and a payload area. The size of the overhead area is able to be flexibly configured according to bit rates of the clients, i.e., for clients within (or with) different bit rate ranges, the size of the overhead area in the structure of the Optical Subscriber Unit (OSU) frame carrying the Optical Payload Unit (OPU) is different.

The entity for performing the foregoing operation may be, but is not limited to, an optical transport network device, a base station, a computer second node, and the like.

In an exemplary embodiment, the overhead area in the operation S202 includes a basic overhead unit and a fixed number of extended overhead units, wherein the basic overhead unit is used for transmitting all overheads required by end-to-end monitoring of the client, the fixed number of extended overhead units are used for transmitting at least one overhead field of which a transmission period satisfies a preset condition, and the fixed number is a natural number and is determined according to a different bit rate range of the client. It may be understood that the fixed number may be 0 or a positive integer.

In an exemplary embodiment, the fixed number of extended overhead units include at least one of: a trail trace identifier overhead, an automatic protection switching overhead, and a container status indication overhead, wherein the container status indication overhead is used for indicating a status of the container.

It can be understood that, for a small granularity container that carries a low bit rate client, an overhead transmission period of the small granularity container is relatively slow, and a corresponding defect detection period is relatively long, and may not be able to satisfy an overhead transmission requirement with a high real-time requirement and related operation processing. For example, the protection switching operation needs to be completed within a period of 50ms from the defect generation to the service recovery, which means that the overhead corresponding to the defect that triggers the alarm switching and the automatic protection switching overhead protocol need to be transmitted in a shorter period, therefore, it is necessary to increase the transmission frequency of the overhead with a high real-time requirement, such as automatic protection switching transmission protocol, and shorten the overhead transmission periods. In other words, it is needed to increase the transmission opportunities of overheads with high real-time requirements in the small granularity container with the fixed length. Although the bandwidth utilization rate may be reduced by a certain extent, because the carried client is a low bit rate client, the reduction of the bandwidth utilization rate does not bring significant performance degradation experience. For a small granularity container that carries a high bit rate client, an overhead transmission period of the small granularity container is relatively fast, and a corresponding defect detection period is relatively short, so that an overhead transmission requirement with a high real-time requirement can be satisfied, and it is not necessary to increase the transmission frequency of the overhead with a high real-time requirement.

An exemplary implementation is described as follows.

The overhead area of the small granularity container (equivalent to the container in the embodiments of the present disclosure) into two parts: basic overhead unit(s) and extended overhead unit(s). The basic overhead unit is used for transmitting a set of all overheads for end-to-end monitoring of the client. The extended overhead unit is used for transmitting at least one overhead field having a high requirement for real-time performance. The at least one overhead field is a subset of end-to-end monitoring overheads, and includes one or more of a trail trace identifier overhead, an automatic protection switching overhead channel, and a small granularity container status indication overhead. The small granularity container status indication overhead is used for indicating a status of the small granularity container, wherein the status includes a normal status and a maintenance status, and the maintenance status includes an alarm indication signal, an open connection indication signal, and a locked indication signal.

The clients that need to be supported are divided according to different bit rate ranges. A maximum bit rate in a high bit rate range is a maximum bit rate of the clients that need to be supported. The structure of the small granularity container is determined according to the high bit rate. The structure of the small granularity container includes an overhead area and a payload area. The overhead area includes a basic overhead unit. The structure of the small granularity container is able to satisfy the transmission period of the overhead with a high real-time requirement. After the design of the structure of the small granularity container of the high bit rate client is completed, for clients in other bit rate ranges, a fixed number of extended overhead units are evenly configured in the structure of the small granularity container as required, so as to ensure that the structure of the small granularity container carrying the client with the lowest bit rate in the bit rate range is able to complete overhead transmission with high real-time requirements within a fixed time period X.

In an exemplary embodiment, a maximum length of the container is determined as L=Y*X, wherein Y is a minimum bit rate corresponding to the client within a target bit rate range, and X is a minimum transmission period of the basic overhead unit of the container.

In an exemplary embodiment, an overhead field with a high real-time requirement and a corresponding transmission period are determined, and the number of required basic units is determined based on the number of overhead bytes carried by the basic overhead unit and the size of the overhead field, the transmission period of the basic unit is determined, and a minimum transmission period X of the basic unit therein is taken as a transmission period of the basic unit of the small granularity container. For example, when one basic overhead unit is used to transmit one byte of an automatic protection switching protocol, and the automatic protection switching protocol includes four bytes, four basic overhead units are needed to complete the transmission of the automatic protection switching protocol. If the transmission of the automatic protection switching protocol needs to be completed within 3ms, the transmission period of the basic overhead unit is 3ms/4 = 0.75ms. Assuming that the minimum bit rate of the clients in the high bit rate range is Y, the maximum length L of the structure of the small granularity container is determined based on the values of X and Y according to a formula L = Y * X. Based on this, the structure of the small granularity container can be determined.

In an exemplary embodiment, the different bit rate ranges include N bit rate ranges, wherein the fixed numbers of the extended overhead units in the containers that carry the clients within the different bit rate ranges are different, the fixed number of extended overhead units are evenly distributed in the container, and N is a positive integer greater than 1.

In an exemplary embodiment, when the different bit rate ranges include N bit rate ranges, a client in a first bit rate range of the N bit rate ranges may be configured with a basic overhead unit with a fixed size, wherein the first bit rate range is a maximum bit rate range of the N bit rate ranges. A basic overhead unit with a fixed size, a payload area, and one or more extended overhead units may be configured for a client in a bit rate range other than the first bit rate range among the N bit rate ranges.

It should be noted that, when the fixed number of the extended overhead units is determined, the fixed number of extended overhead units need to be evenly distributed in the container. For example, when the length of the container is 9280 bytes, the container is constructed by using one basic overhead unit of 16 bytes and three extended overhead units of 16 bytes. In order to ensure the usage effect, the three extended overhead units may be spaced by 2304 payload bytes, that is, the three extended overhead units are evenly inserted into the current container to construct a new container structure.

In an exemplary embodiment, when N=3, the different bit rate ranges include: a first bit rate range, and other bit rate ranges except the first bit rate range, i.e., a second bit rate range and a third bit rate range. During practical application, according to the foregoing method, a basic overhead unit with a fixed size is configured for a client within the first bit rate range; a basic overhead unit with a fixed size, a payload area with a first size, and one or more extended overhead units are configured for the client within the second bit rate range; a basic overhead unit with a fixed size, a payload area with a second size, and one or more extended overhead units are configured for the client within the third bit rate range, wherein the first size is greater than the second size. A minimum value of the first bit rate range is greater than or equal to a maximum value of the second bit rate range, and a minimum value of the second bit rate range is greater than or equal to a maximum value of the third bit rate range.

For example, in practical applications, clients may be divided into three groups according to bit rate ranges, a first group being clients with a high bit rate of 500Mbps - 1Gbps (equivalent to the above first bit rate range), a second group being clients with a medium bit rate 100Mbps - 500Mbps (equivalent to the above second bit rate range), and a third group being clients with a low bit rate 10Mbps - 100Mbps (equivalent to the above third bit rate range). The basic overhead unit has a size of 16 bytes, and is configured to transmit an overhead required by end-to-end monitoring of the client, wherein one byte is used for transmitting an Automatic Protection Switching (APS) and one byte is used for transmitting a status indication signal STAT. Since a complete APS requires 4 bytes, four basic overhead units are used to complete one APS protocol transmission. Since the transmission of the APS should be completed within 1ms, the transmission period of each basic overhead unit is 0.25ms. The transmission of STAT can be completed by one basic overhead unit, and since the transmission of the STAT needs to be completed within 1ms, the transmission period of each basic overhead unit is 1ms. The required minimum transmission period of the basic overhead unit is 0.25ms, in other words, the transmission of the overhead related to protection switching needs to be completed within 0.25ms.

In order to facilitate the understanding of the above client mapping method, the above technical solutions will be explained below in combination with an exemplary embodiment, but the exemplary embodiment is not intended to limit the technical solutions of the embodiments of the present disclosure.

In a complete embodiment, a method for implementing a small granularity container is provided, in which a structure of the small granularity container is determined as a fixed length, supported clients are divided according to their bit rate ranges, and then overhead areas with different sizes are configured according to different bit rate ranges, thereby satisfying a requirement for the transmission period of the overhead field with high real-time performance.

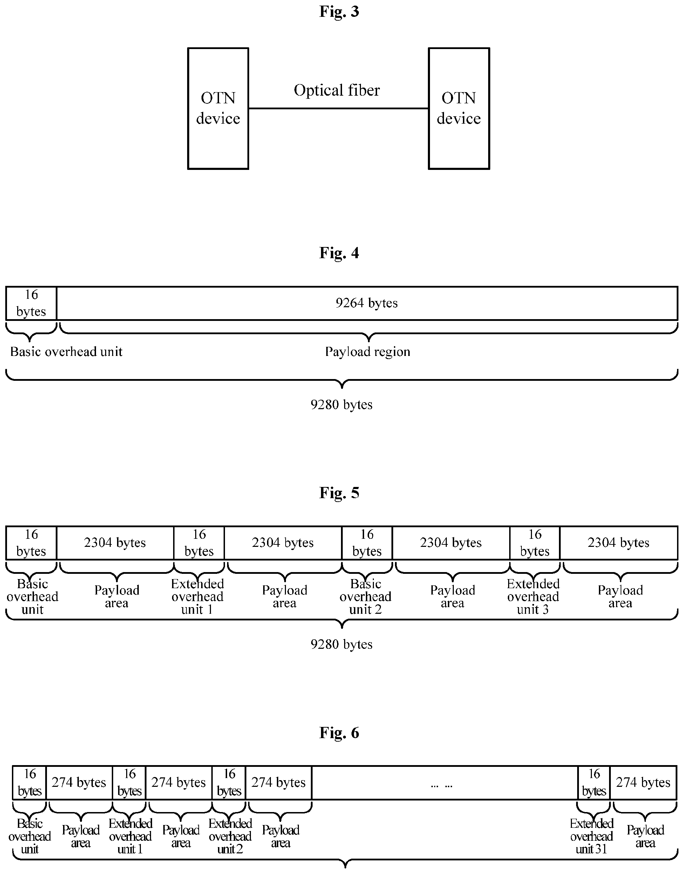

In an exemplary embodiment, the foregoing method for implementing the small granularity container may be operated on the network architecture shown in Fig. 3. Fig. 3 is a schematic diagram of a scenario where two OTN devices transmit a client signal through an OTN interface according to some embodiments of the present disclosure. The network architecture includes an OTN device 1, an OTN device 2, and an optical fiber. A connection is established between the OTN device 1 and the OTN device 2 via the optical fiber, and a data signal corresponding to a client is transmitted between the OTN device 1 and the OTN device 2. A supported client bit rate range is 10Mbps - 1Gbps.

As an exemplary embodiment, a client signal is transmitted between two OTN devices through an OTN interface, which specifically includes the following operations 1 to 5.

In operation 1, clients are divided into three groups according to bit rate ranges, a first group being clients with a high bit rate of 500Mbps - 1Gbps, a second group being clients with a medium bit rate 100Mbps - 500Mbps, and a third group being clients with a low bit rate 10Mbps - 100Mbps.

In operation 2, the size of a basic overhead unit is 16 bytes, and is configured to transmit an overhead required by end-to-end monitoring of a client. One byte of the basic overhead unit is used for transmitting an APS, and one byte of the basic overhead unit is used for transmitting a status indication signal (STAT).

The APS includes 4 bytes in total, and four basic overhead units complete one APS protocol transmission. The transmission of the APS needs to be completed within 1ms, so that a transmission period of each basic overhead unit is 0.25ms.

The STAT includes 1 byte in total, and one basic overhead unit completes one STAT transmission. The transmission of the STAT needs to be completed within 1ms, so that the transmission period of each basic overhead unit is 1ms.

Based on the above considerations, the required minimum transmission period of the basic overhead unit is 0.25ms, in other words, the transmission of the overhead related to protection switching needs to be completed within 0.25ms.

In operation 3, the lowest bit rate in the high bit rate range is 500Mbps, the minimum transmission period of the 16-byte basic overhead unit is 0.25ms, and based on this, the maximum length of the frame structure of the small granularity container is calculated to be 9375 bytes. In consideration of the preference of a multiple relationship with 16 bytes, the length of the small granularity container is determined to be 9280 bytes, among the 9280 bytes, 16 bytes are used as the overhead area which contains one basic overhead unit, and 9264 bytes are used as the payload area, and the overhead ratio is 16/9280 = 0.17%.

Fig. 4 is a schematic structural diagram of a small granularity container corresponding to a client within a high bit rate range according to some embodiments of the present disclosure. As shown in Fig. 4, in an exemplary embodiment, the transmission period of the basic overhead unit of the small granularity container carrying 500Mbps client is: 9280*8/500 ≈ 0.148ms, which satisfies the time period requirements of protection switching-related overhead transmission.

In operation 4, for a client within a medium bit rate range, a lowest bit rate of the client is 100Mbps, and if the small granularity container determined in operation 3 is directly used, the transmission period of the protection switching-related overhead is 9280*8/100 ≈ 0.7424ms, which cannot satisfy requirements. To address this issue, for the small granularity container of the client within the medium bit rate range, the small granularity container may be constructed by evenly inserting three extended overhead units, i.e., the length of the small granularity container is 9280 bytes, including one 16-byte basic overhead unit and three 16-byte extended overhead units, wherein the overhead units are spaced by 2304 payload bytes, and the overhead ratio is 16*4/9280 = 0.69%.

Fig. 5 is a schematic structural diagram of a small granularity container corresponding to a client within a medium bit rate range according to some embodiments of the present disclosure. As shown in Fig. 5, in an exemplary embodiment, a Frame Alignment Signal (FAS), a Multi-frame Alignment Signal (MFAS), a status indication signal and an automatic protection switching protocol are carried in the extended overhead units, and the remaining fields of the extended overhead units can support user-defined settings, for example, the remaining fields of the extended overhead units may be used as a communication channel or used for transmitting synchronization information.

In operation 5, for a client within a low bit rate range, the lowest bit rate of the client is 10Mbps, and if the small granularity container determined in operation 4 is directly used, the transmission period of the protection switching-related overhead is 9280*8/10 ≈ 7.424ms, which cannot satisfy requirements. To address this issue, for the small granularity container of the client within the low bit rate range, the small granularity container may be constructed by evenly inserting three extended overhead units, i.e., the length of the small granularity container is 9280 bytes, including one 16-byte basic overhead unit and thirty-one 16-byte extended overhead units, wherein the overhead units are spaced by 274 payload bytes, and the overhead ratio is 16*32/9280 = 5.52%;

Fig. 6 is a schematic structural diagram of a small granularity container corresponding to a client within a low bit rate range according to some embodiments of the present disclosure. As shown in Fig. 6, in an exemplary embodiment, a Frame Alignment Signal (FAS), a Multi-frame Alignment Signal (MFAS), a status indication signal and an automatic protection switching protocol are carried in the extended overhead units, and the remaining fields of the extended overhead units can support user-defined settings, for example, the remaining fields of the extended overhead units may be used as a communication channel or used for transmitting synchronization information.

To sum up, by means of the above solution, on the basis of the above structure design of the small granularity container of the high bit rate client, for clients in other bit rate ranges, a fixed number of extended overhead units are evenly configured in the small granularity container structure as required, it is ensured that the structure of the small granularity container carrying the client of the lowest bit rate in the bit rate range can satisfy the overhead transmission with high real-time requirements in the range of a fixed time period X.

Through the description of the foregoing embodiments, those having ordinary skill in the art may clearly understand that the client mapping method according to the foregoing embodiments may be implemented by software in addition to a necessary universal hardware platform, and definitely may also be implemented by hardware, however, in many cases, the former is a preferred implementation. Based on such understanding, the essence of the technical solutions of the present disclosure or the part contributing to the related art may be embodied in the form of a software product. The computer software product may be stored in a storage medium (such as a Read Only Memory (ROM)/Random Access Memory (RAM), a magnetic disk, and an optical disk), and may include several instructions for instructing a second node device (which may be a mobile phone), a computer, a server, a network device, or the like.

The embodiments further provide a client mapping device, the client mapping device is used for implementing the described embodiments and exemplary implementations, and what has been described will not be elaborated. The term "module", as used hereinafter, is a combination of software and/or hardware capable of realizing a predetermined function. Although the client mapping device described in the following embodiment is preferably implemented by software, implementation of hardware or a combination of software and hardware is also possible and conceived.

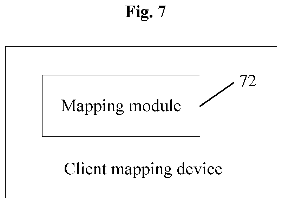

Fig. 7 is a structural block diagram of a client mapping device according to some embodiments of the present disclosure. As shown in Fig. 7, the client mapping device includes:
a mapping module 72, configured to map a client into a corresponding container, wherein the container is a structure with a fixed length and includes an overhead area and a payload area; and containers that carry clients within different bit rate ranges have different overhead areas.

By means of the client mapping device, a client is mapped to a corresponding container having a structure with a fixed length, and the containers may correspondingly carry clients within different bit rate ranges according to different configured sizes of overhead areas, therefore, the solution provided in the embodiments of the present disclosure may solve the technical problem in the related art that containers cannot be configured for clients with different bit rates so as to compromise between overhead transmission periods and bandwidth utilization, and may achieve the effect of satisfying the requirements for the transmission periods of overhead fields with high real-time demands without increasing the transfer frequency for the overhead that has high real-time requirements.

As an exemplary implementation, in an actual application, the client may be mapped into a small granularity container. The small granularity container is a frame structure with a fixed length, and contains two parts which are respectively an overhead area and a payload area. The size of the overhead area is able to be flexibly configured according to bit rates of the clients, i.e., for clients within (or with) different bit rate ranges, the size of the overhead area in the structure of the Optical Subscriber Unit (OSU) frame carrying the Optical Payload Unit (OPU) is different.

In an exemplary embodiment, the overhead area of the mapping module 72 includes a basic overhead unit and a fixed number of extended overhead units, wherein the basic overhead unit is used for transmitting all overheads required by end-to-end monitoring of the client, the fixed number of extended overhead units are used for transmitting at least one overhead field of which a transmission period satisfies a preset condition, and the fixed number is a natural number and is determined according to a different bit rate range of the client.

In an exemplary embodiment, the fixed number of extended overhead units include at least one of: a trail trace identifier overhead, an automatic protection switching overhead, and a container status indication overhead, wherein the container status indication overhead is used for indicating a status of the container.

It can be understood that, for a small granularity container that carries a low bit rate client, an overhead transmission period of the small granularity container is relatively slow, and a corresponding defect detection period is relatively long, and may not be able to satisfy an overhead transmission requirement with a high real-time requirement and related operation processing. For example, the protection switching operation needs to be completed within a period of 50ms from the defect generation to the service recovery, which means that the overhead corresponding to the defect that triggers the alarm switching and the automatic protection switching overhead protocol need to be transmitted in a shorter period, therefore, it is necessary to increase the transmission frequency of the overhead with a high real-time requirement, such as automatic protection switching transmission protocol, and shorten the overhead transmission periods. In other words, it is needed to increase the transmission opportunities of overheads with high real-time requirements in the small granularity container with the fixed length. Although the bandwidth utilization rate may be reduced by a certain extent, because the carried client is a low bit rate client, the reduction of the bandwidth utilization rate does not bring significant performance degradation experience. For a small granularity container that carries a high bit rate client, an overhead transmission period of the small granularity container is relatively fast, and a corresponding defect detection period is relatively short, so that an overhead transmission requirement with a high real-time requirement can be satisfied, and it is not necessary to increase the transmission frequency of the overhead with a high real-time requirement.

An exemplary implementation is described as follows.

The overhead area of the small granularity container (equivalent to the container in the embodiments of the present disclosure) into two parts: basic overhead unit(s) and extended overhead unit(s). The basic overhead unit is used for transmitting a set of all overheads for end-to-end monitoring of the client. The extended overhead unit is used for transmitting at least one overhead field having a high requirement for real-time performance. The at least one overhead field is a subset of end-to-end monitoring overheads, and includes one or more of a trail trace identifier overhead, an automatic protection switching overhead channel, and a small granularity container status indication overhead. The small granularity container status indication overhead is used for indicating a status of the small granularity container, wherein the status includes a normal status and a maintenance status, and the maintenance status includes an alarm indication signal, an open connection indication signal, and a locked indication signal.

The clients that need to be supported are divided according to different bit rate ranges. A maximum bit rate in a high bit rate range is a maximum bit rate of the clients that need to be supported. The structure of the small granularity container is determined according to the high bit rate. The structure of the small granularity container includes an overhead area and a payload area. The overhead area includes a basic overhead unit. The structure of the small granularity container is able to satisfy the transmission period of the overhead with a high real-time requirement. After the design of the structure of the small granularity container of the high bit rate client is completed, for clients in other bit rate ranges, a fixed number of extended overhead units are evenly configured in the structure of the small granularity container as required, so as to ensure that the structure of the small granularity container carrying the client with the lowest bit rate in the bit rate range is able to complete overhead transmission with high real-time requirements within a fixed time period X.

In an exemplary embodiment, a maximum length of the container is determined as L=Y*X, wherein Y is a minimum bit rate corresponding to the client within a target bit rate range, and X is a minimum transmission period of the basic overhead unit of the container.

In an exemplary embodiment, an overhead field with a high real-time requirement and a corresponding transmission period are determined, and the number of required basic units is determined based on the number of overhead bytes carried by the basic overhead unit and the size of the overhead field, the transmission period of the basic unit is determined, and a minimum transmission period X of the basic unit therein is taken as a transmission period of the basic unit of the small granularity container. For example, when one basic overhead unit is used to transmit one byte of an automatic protection switching protocol, and the automatic protection switching protocol includes four bytes, four basic overhead units are needed to complete the transmission of the automatic protection switching protocol. If the transmission of the automatic protection switching protocol needs to be completed within 3ms, the transmission period of the basic overhead unit is 3ms/4 = 0.75ms. Assuming that the minimum bit rate of the clients in the high bit rate range is Y, the maximum length L of the structure of the small granularity container is determined based on the values of X and Y according to a formula L = Y * X. Based on this, the structure of the small granularity container can be determined.

In an exemplary embodiment, the different bit rate ranges of the mapping module 72 include N bit rate ranges, wherein the fixed numbers of the extended overhead units in the containers that carry the clients within the different bit rate ranges are different, the fixed number of extended overhead units are evenly distributed in the container, and N is a positive integer greater than 1.

In an exemplary embodiment, when the different bit rate ranges include N bit rate ranges, a client in a first bit rate range of the N bit rate ranges may be configured with a basic overhead unit with a fixed size, wherein the first bit rate range is a maximum bit rate range of the N bit rate ranges. A basic overhead unit with a fixed size, a payload area, and one or more extended overhead units may be configured for a client in a bit rate range other than the first bit rate range among the N bit rate ranges.

It should be noted that, when the fixed number of the extended overhead units is determined, the fixed number of extended overhead units need to be evenly distributed in the container. For example, when the length of the container is 9280 bytes, the container is constructed by using one basic overhead unit of 16 bytes and three extended overhead units of 16 bytes. In order to ensure the usage effect, the three extended overhead units may be spaced by 2304 payload bytes, that is, the three extended overhead units are evenly inserted into the current container to construct a new container structure.

For example, in practical applications, clients may be divided into three groups according to bit rate ranges, a first group being clients with a high bit rate of 500Mbps - 1Gbps (equivalent to the above first bit rate range), a second group being clients with a medium bit rate 100Mbps - 500Mbps (equivalent to the above second bit rate range), and a third group being clients with a low bit rate 10Mbps - 100Mbps (equivalent to the above third bit rate range). The basic overhead unit has a size of 16 bytes, and is configured to transmit an overhead required by end-to-end monitoring of the client, wherein one byte is used for transmitting an Automatic Protection Switching (APS) and one byte is used for transmitting a status indication signal STAT. Since a complete APS requires 4 bytes, four basic overhead units are used to complete one APS protocol transmission. Since the transmission of the APS should be completed within 1ms, the transmission period of each basic overhead unit is 0.25ms. The transmission of STAT can be completed by one basic overhead unit, and since the transmission of the STAT needs to be completed within 1ms, the transmission period of each basic overhead unit is 1ms. The required minimum transmission period of the basic overhead unit is 0.25ms, in other words, the transmission of the overhead related to protection switching needs to be completed within 0.25ms.

It should be noted that each module may be implemented by software or hardware, the latter may be implemented in the following manner, but is not limited thereto: all the modules are located in a same processor; alternatively, the modules are located in different processors in an arbitrary combination.

The embodiments of the present disclosure also provide a computer readable storage medium, the computer readable storage medium stores a computer program, wherein the computer program, when running on a processor, causes the processor to execute the operations in any one of the described method embodiments.

In an exemplary embodiment, the computer readable storage medium may include, but is not limited to, any medium that can store a computer program, such as a Universal Serial Bus (USB) flash drive, a Read Only Memory (ROM), a Random Access Memory (RAM), a removable hard disk, a magnetic disk, or an optical disc.

The embodiments of the present disclosure further provide an electronic device, including a memory and a processor, the memory stores a computer program, and the processor is configured to run the computer program to execute operations in any one of the method embodiments.

**In** an exemplary embodiment, the electronic device may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. A client mapping method, comprising:
mapping a client into a corresponding container, wherein the container is a structure with a fixed length and comprises an overhead area and a payload area; and containers that carry clients within different bit rate ranges have different overhead areas.

2. The client mapping method according to claim 1, wherein
the overhead area comprises: a basic overhead unit and a fixed number of extended overhead units, wherein the basic overhead unit is used for transmitting all overheads required by end-to-end monitoring of the client, the fixed number of extended overhead units are used for transmitting at least one overhead field of which a transmission period satisfies a preset condition, and the fixed number is a natural number and is determined according to a different bit rate range of the client.

3. The client mapping method according to claim 2, wherein
the fixed number of extended overhead units comprise at least one of: a trail trace identifier overhead, an automatic protection switching overhead, and a container status indication overhead, wherein the container status indication overhead is used for indicating a status of the container.

4. The client mapping method according to claim 2, further comprising:
determining a maximum length of the container as L=Y*X, wherein Y is a minimum bit rate corresponding to the client within a target bit rate range, and X is a minimum transmission period of the basic overhead unit of the container.

5. The client mapping method according to claim 2, wherein the different bit rate ranges comprise N bit rate ranges, wherein the fixed numbers of the extended overhead units in the containers that carry the clients within the different bit rate ranges are different, the fixed number of extended overhead units are evenly distributed in the container, and N is a positive integer greater than 1.

6. A client mapping device, comprising:
a mapping module, configured to map a client into a corresponding container, wherein the container is a structure with a fixed length and comprises an overhead area and a payload area; and containers that carry clients within different bit rate ranges have different overhead areas.

7. The client mapping device according to claim 6, wherein
the overhead area comprises: a basic overhead unit and a fixed number of extended overhead units, wherein the basic overhead unit is used for transmitting all overheads required by end-to-end monitoring of the client, the fixed number of extended overhead units are used for transmitting at least one overhead field of which a transmission period satisfies a preset condition, and the fixed number is a natural number and is determined according to a different bit rate range of the client.

8. The client mapping device according to claim 7, wherein
the different bit rate ranges comprise N bit rate ranges, wherein the fixed numbers of the extended overhead units in the containers that carry the clients within the different bit rate ranges are different, the fixed number of extended overhead units are evenly distributed in the container, and N is a positive integer greater than 1.

9. A computer readable storage medium, wherein the computer readable storage medium stores a computer program, and the computer program, when running on a processor, causes the processor to execute the client mapping method according to any one of claims 1 to 5.

10. An electronic device, comprising a memory and a processor, wherein the memory stores a computer program, and the processor is configured to run the computer program so as to execute the client mapping method according to any one of claims 1 to 5.
